Europäisches Patentamt

European Patent Office

Office européen des brevets

(11) Veröffentlichungsnummer: **0 246 548 B1**

# (12) EUROPÄISCHE PATENTSCHRIFT

(45) Veröffentlichungstag der Patentschrift:
21.03.90

(21) Anmeldenummer: 87106881.3

(22) Anmeldetag: 12.05.87

(51) Int. Cl.⁴: **C03B 23/07**, C03B 23/06, C03B 23/04, H01J 61/30

(54) Verfahren zur Herstellung eines Entladungsgefässes für kompakte Niederdruckentladungslampen.

(30) Priorität: 21.05.86 DE 3616986
10.03.87 DE 3707679

(43) Veröffentlichungstag der Anmeldung:
25.11.87 Patentblatt 87/48

(45) Bekanntmachung des Hinweises auf die Patenterteilung:
21.03.90 Patentblatt 90/12

(84) Benannte Vertragsstaaten:
DE FR GB IT

(56) Entgegenhaltungen:
EP-A- 0 061 758
DE-A- 3 544 465
FR-A- 2 322 448
US-A- 1 948 560
US-A- 3 263 852
US-A- 3 679 385

(73) Patentinhaber: Patent-Treuhand-Gesellschaft für elektrische Glühlampen mbH, Hellabrunner Strasse 1, D-8000 München 90(DE)

(72) Erfinder: Klein, Lutz, Marderweg 5,
D-8900 Augsburg(DE)
Erfinder: Panofski, Ernst, Hochfeldstrasse 3,
D-8900 Augsburg(DE)
Erfinder: Plischke, Josef, Pfirsichweg 28,
D-8900 Augsburg(DE)
Erfinder: Eckstein, Gerd-Otto, Dr., Pfrontener Strasse 10 1/2, D-8900 Augsburg(DE)
Erfinder: Schmidt, Hans, Berglusstrasse 80,
D-8900 Augsburg(DE)

## Beschreibung

Die Erfindung betrifft ein Verfahren zur Herstellung eines ein- oder mehrfach gebogenen rohrförmigen Entladungsgefäßes für eine kompakte Niederdruckentladungslampe entsprechend dem Oberbegriff des Anspruchs 1.

Aus der DE-OS 3 005 052 ist ein Verfahren zur Herstellung eines mehrfach gebogenen rohrförmigen Entladungsgefäßes für elektrische Entladungslampen bekannt. Zur Herstellung der Biegungen wird dazu ein im wesentlichen gerades Glasrohr an den entsprechenden Stellen bis zum Erweichen erhitzt und durch entsprechendes Schwenken der nicht erhitzten Teile das Rohr an den erhitzten Stellen um einen Formkörper herumgebogen.

Auch in der EP-PS 61 758 wird ein Verfahren zur Herstellung eines ein- oder mehrfach gebogenen rohrförmigen Entladungsgefäßes für eine Quecksilberdampf-Niederdruckentladungslampe beschrieben. Die zu biegenden Rohrteile eines geraden Glasrohres werden auf Erweichungstemperatur gebracht und durch Gegeneinanderbiegen der benachbarten Rohrteile eine 180°-Biegung erstellt. Anschließend wird die 180°-Biegung in einen Formkörper gegeben und durch Einblasen von Druckluft in die Rohrenden eine dem Formkörper entsprechende U-förmige Biegung mit im wesentlichen rechtwinkligen Ecken hergestellt. Die rechtwinkligen Ecken dienen dabei als Kühlstelle für den optimalen Betrieb der Lampe.

Als nachteilig erweist sich bei der Herstellung der 180°-Biegungen, daß die Wanddicke des Glasrohres an der äußeren Mantelfläche der Biegung durch den Biegevorgang abnimmt. Bei der Erstellung von 180°-Biegungen mit im wesentlichen rechtwinkligen Ecken wird diese Abnahme noch weiter verstärkt. Aufgrund der dünnen Wand sind daher die Entladungsgefäße an diesen Stellen besonders bruchgefährdet.

Besonders kritisch ist die Verteilung des Glases, wenn die 180°-Biegung im Bereich des Scheitels einen Innendurchmesser aufweisen soll, der größer als der Durchmesser des ursprünglichen geraden Glasrohres ist. Solchermaßen gestaltete Bögen werden insbesondere für kompakte Niederdruckentladungslampen mit hoher Belastung benötigt.

Die Bruchgefährdung kann verhindert werden, indem bei der Herstellung des Entladungsgefäßes ein Glasrohr mit einem entsprechend großen Wanddurchmesser verwendet wird, so daß nach Erstellung der 180°-Biegungen die Glaswand an der äußeren Mantelfläche eine gewisse Mindestwanddicke nicht unterschreitet. Dadurch wird jedoch eine erhebliche Gewichtszunahme des Gefäßes und damit der Lampe sowie eine Kostensteigerung in Kauf genommen.

Aus der US-PS 1 948 560 sind Glasröhrchen als Führungshilfen bei der Textilfaserherstellung bekannt. Die trichterförmig ausgebildeten Röhrchen weisen nach innen ragende Einschnürungen auf, die für die Zentrierung der Textilfaser in der Achse des Röhrchens sorgen. Da durch die Einschnürungen die Röhrchen stark bruchgefährdet sind, wird vorgeschlagen durch Stauchen des Röhrchens im Bereich der Einschnürungen die Dicke der Glaswand zu erhöhen.

Ziel der Erfindung ist es, ein Verfahren zur Herstellung eines ein- oder mehrfach gebogenen Entladungsgefäßes aus Glas zu finden, wobei trotz Verwendung eines geraden Glasrohres mit einer Wanddicke, wie sie für die geraden Rohrteile ausreichend ist, auch in den Bereichen der Biegungen, wo der Biegeradius am größten ist, eine gewisse Mindestwandstärke nicht unterschritten wird. Insbesondere soll mit dem Verfahren keine wesentliche Gewichtszunahme beim Entladungsgefäß verbunden sein.

Das Ziel wird durch einen Verfahrensschritt entsprechend dem kennzeichnenden Merkmal des 1. Anspruchs gelöst. Weitere vorteilhafte Verfahrensschritte sind den Unteransprüchen zu entnehmen.

Durch die Stauchung des Entladungsgefäßes wird an den Stellen, an denen eine 180°-Biegung vorgesehen ist, die Rohrwand verstärkt. Eine wesentlich gezieltere Verteilung des Glases im Bereich der Biegung läßt sich erreichen, wenn das Glas in den beiden Randbereichen des für die Biegung benötigten Rohrabschnitts stärker als in dem dazwischenliegenden Mittelbereich erwärmt wird.

Bei Glasrohren mit geringen Wanddicken ist es erforderlich, daß während des Stauchvorganges mit Hilfe von Blasluft im Glasrohr ein geringer Überdruck erzeugt wird. Dadurch wird ein Zusammenfallen des Glasrohres im Stauchbereich verhindert und einer Verkleinerung des Innendurchmessers vorgebeugt.

Vom glastechnischen Standpunkt kann die Stauchung am einfachsten realisiert werden, wenn das Glasrohr während des Erwärmungs- und Stauchvorganges um seine Längsachse rotiert. Wird dagegen das Glasrohr während des Erwärmungs- und Stauchvorganges nicht gedreht, so läßt sich das Glas aufgrund der Schwerkraft verstärkt nach unten verteilen. Die Biegung des Rohres ist dann so vorzunehmen, daß die am Boden des Glasrohres angesammelte Glasmenge zur Bildung der äußeren Mantelfläche verwendet wird. Auf diese Weise lassen sich mit der am Boden angesammelten Glasmenge auch weite Bögen mit rechtwinkligen Ecken erstellen, ohne daß eine Abnahme der Wandstärke des Glasrohres in der Biegung in Kauf genommen werden muß. Eine solche Durchführung ist verfahrenstechnisch aufwendiger und erfordert insbesondere eine besondere Flammentechnik und gesteuerte Blasluft.

Zur Herstellung der rechtwinkligen Ecken an der 180°-Biegung wird die Biegung in einem speziellen Verfahrensschritt in eine entsprechende Form gegeben und die Ecken durch Einblasen von Druckluft in die Rohrenden erzeugt. Die rechtwinkligen Ecken dienen beim fertigen Entladungsgefäß als Kühlstellen, durch die der Dampfdruck im Gefäß und damit die Lichtausbeute geregelt wird.

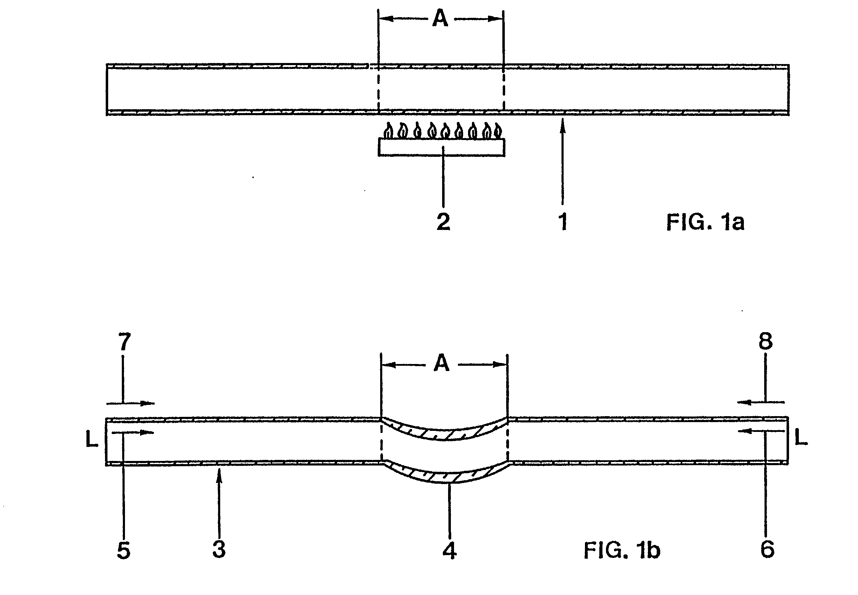

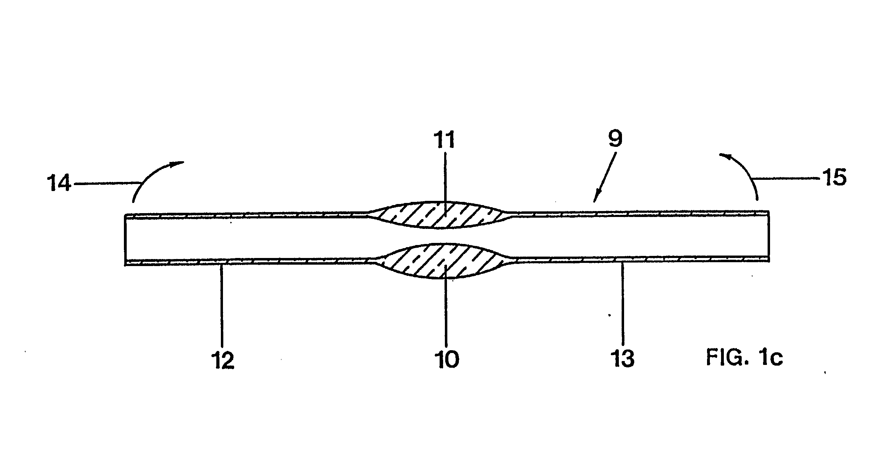

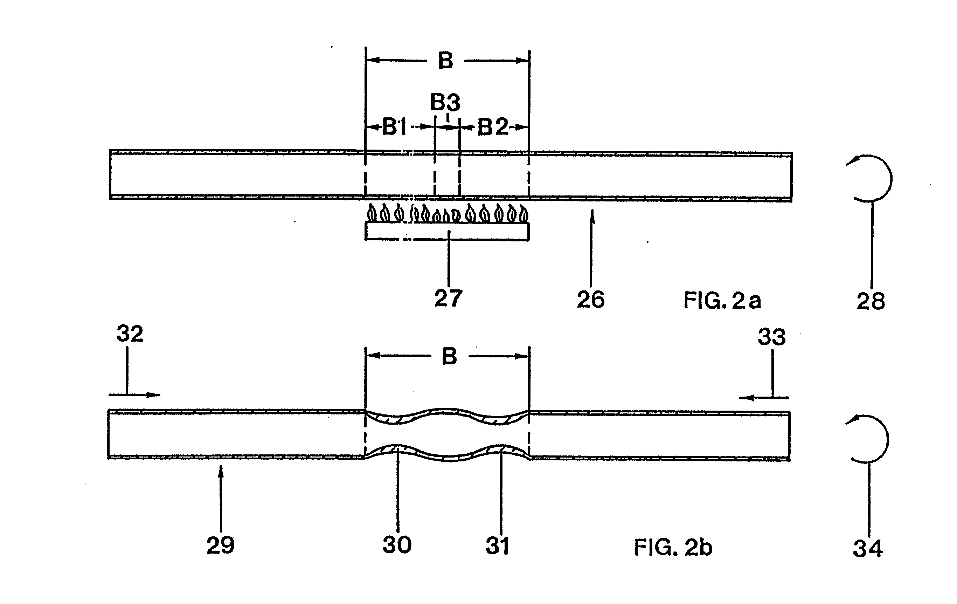

Das Verfahren ist anhand von zwei unterschiedlichen Verfahrensabläufen Figur 1a bis 1e und Figur 2a bis 2e näher veranschaulicht.

Figuren 1a bis 1e zeigen die einzelnen Verfahrensschritte zur Herstellung eines einfach gebogenen rohrförmigen Entladungsgefäßes mit im wesentlichen rechtwinkligen Ecken. Zur Herstellung wird zuerst, wie in Figur 1a dargestellt, der für die 180°-Biegung benötigte Rohrabschnitt A eines geraden Glasrohres 1 mit Hilfe eines Gasbrenners 2 bis zur Erweichung erwärmt. Das Glasrohr wird wie der Erwärmung nicht gedreht, was, wie unten aufgezeigt, Vorteile in bezug auf die Dicke der Glaswand beim Biegevorgang hat. Das Glasrohr 3 erhält, wie in Figur 1b gezeigt, in dem erwärmten Abschnitt A eine Einschnürung 4. In die beiden Enden des Glasrohres wird anschließend Luft geblasen - durch die beiden mit L bezeichneten Pfeile 5 und 6 angedeutet - und gleichzeitig die Enden in Richtung der beiden Pfeile 7 und 8 gegeneinander bewegt, so daß an der eingeschnürten Stelle 4 das Glasrohr gestaucht wird.

In Figur 1c ist das Glasrohr 9 nach dem Stauchen wiedergegeben. Im Bereich der Stauchung ergibt sich eine ungleichmäßige Verteilung des Glases, da aufgrund der Schwerkraft das Glas bei der Erwärmung im ersten Verfahrensschritt verstärkt nach unten gelaufen ist. Die am Boden des Rohres 9 angesammelte Glasmenge 10 ist somit größer als die an der oben liegenden Wandung 11. Durch Gegeneinanderbiegen der seitlich von dem gestauchten Bereich befindlichen geraden Rohrabschnitte 12, 13 nach oben - entsprechend den Pfeilen 14 und 15 - wird nun eine 180°-Biegung erzeugt. Der Biegevorgang wird nach oben ausgeführt, damit die größere Glasmenge 10 am Boden des Rohres 9 zur Bildung der äußeren Mantelfläche an der 180°-Biegung zur Verfügung steht.

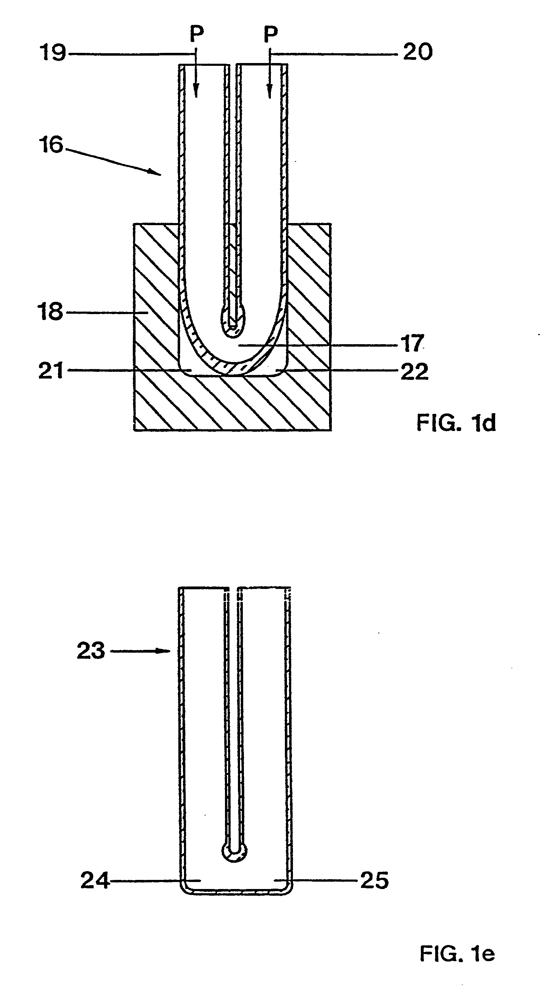

Anschließend wird - wie in Figur 1d dargestellt - das gebogene Glasrohr 16 mit der 180°-Biegung 17 in einen Formkörper 18 aus Metall gebracht. Mittels Preßluft, die - veranschaulicht durch die mit P bezeichneten Pfeile 19 und 20 - in die beiden Enden des gebogenen Glasrohres 16 befördert wird, wird das Glasrohr 16 in die rechtwinkligen Ecken 21 und 22 des Formkörpers 18 geblasen

In Figur 1e ist das fertig geformte Entladungsgefäß 23 mit einer 180°-Biegung und zwei im wesentlichen rechtwinkligen Ecken 24, 25 dargestellt.

Figuren 2a bis 2d zeigen etwas abgewandelte Verfahrensschritte zur Herstellung einer Stauchung an einem geraden Glasrohr. Das Glasrohr 26 wird hierbei - entsprechend Figur 2a - in dem für 180°-Biegung benötigten Abschnitt B durch einen Brenner 27 mit ungleicher Flammenverteilung bis zum Erweichen erwärmt. Die Erhitzung ist dabei in den beiden Randbereichen B1 und B 2 stärker als in dem dazwischenliegenden Bereich B3. Anstelle eines Brenners mit ungleichmäßiger Flammenverteilung können auch mehrere unterschiedliche Brenner, die einen gewissen Abstand voneinander haben, verwendet werden. Gleichzeitig wird das Rohr 26 um seine Achse gedreht - durch den gebogenen Pfeil 28 veranschaulicht - , um eine über den Umfang möglichst gleichmäßige Erwärmung zu erhalten. Handelt es sich um Entladungsgefäße für hochbelastete Niederdruckentladungslampen, die einen "Hochstrombogen", d.h. einen größeren Durchmesser im Scheitel der Biegung benötigen, so sollte in diesem Fall - wie oben aufgeführt - zum Zweck der gezielteren Verteilung des Glases eine Rotation des Rohres um seine Achse unterbleiben.

Das Glasrohr 29 erhält dadurch, wie in Figur 2b gezeigt, in dem erwärmten Rohrabschnitt B zwei Einschnürungen 30, 31, die einen kleinen Abstand voneinander aufweisen. Anschließend werden die Enden des Rohres 29 in Richtung der beiden Pfeile 32, 33 gegeneinander bewegt, so daß das Rohr 29 an den eingeschnürten Stellen 30, 31 eine Stauchung erfährt, wobei zur Erzielung einer großen Gleichmäßigkeit beim Stauchvorgang das Rohr um seine Achse gedreht wird - siehe Pfeil 34.

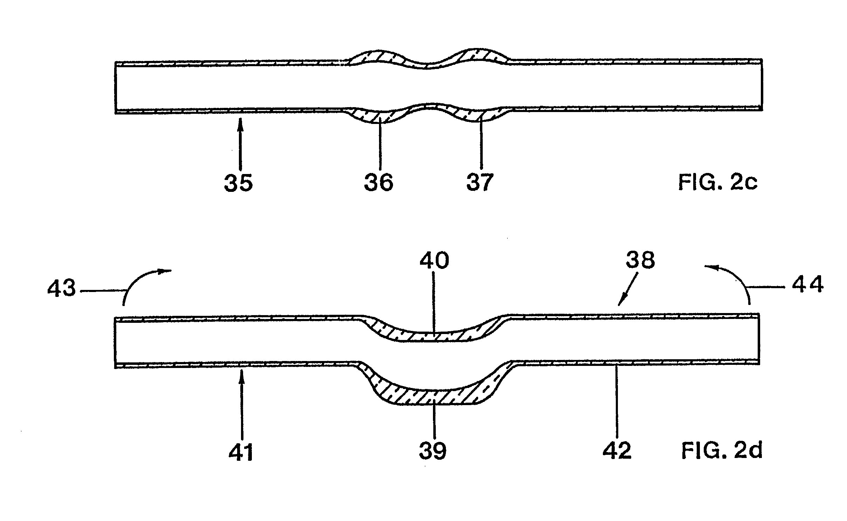

In Figur 2c ist das Glasrohr 35 mit den beiden verdickten Bereichen 36, 37 nach dem Stauchvorgang wiedergegeben. Das Glasrohr 35 erfährt nun eine gleichmäßige Durchwärmung, wobei keine Rotation um die eigene Achse mehr stattfindet. Dadurch läuft aufgrund der Schwerkraft das Glas verstärkt nach unten, so daß, wie in Figur 2d dargestellt, die am Boden des Glasrohres 38 angesammelte Glasmenge 39 größer ist als die am oberen Rand verbleibende Menge 40. Die beiden geraden Rohrabschnitte 41, 42 seitlich von dem gestauchten Bereich werden nun nach oben - entsprechend den Pfeilen 43, 44 - gebogen, so daß eine 180°-Biegung entsteht. Die weiteren Verfahrensschritte zur Herstellung einer 180°-Biegung mit rechtwinkligen Ecken entsprechen den in den Figuren 1d und 1e gezeigten Abläufen.

## Patentansprüche

1. Verfahren zur Herstellung eines ein- oder mehrfach gebogenen rohrförmigen Entladungsgefäßes aus einem geraden Glasrohr für eine kompakte Niederdruckentladungslampe mit mehreren geraden Rohrabschnitten und 180°-Biegungen (17), wobei zur Erstellung einer 180°-Biegung (17) an einer bestimmten Stelle des Glasrohres (1, 26)

   — der für die Ausführung der 180°-Biegung benötigte Rohrabschnitt (A, B) bis zum Erweichen erwärmt wird

   — die seitlich von dem erwärmten Abschnit (A, B) sich erstreckenden geraden Rohrabschnitte (12, 13; 41, 42) anschließend gegeneinander gebogen werden, bis diese parallel zueinander ausgerichtet sind

   — und die jeweilige 180°-Biegung (17) des Glasrohres (16) nach dem Biegevorgang in eine entsprechende Form (18) gegeben sowie durch Einblasen von Druckluft in die Rohrenden rechtwinklige Ecken (24, 25) an der 180°-Biegung erzeugt werden,

   dadurch gekennzeichnet, daß vor dem jeweiligen Biegevorgang das Glasrohr in dem erwärmten Abschnitt (A, B) gestaucht wird, indem die seitlich von dem erwärmten Abschnitt (A, B) sich erstreckenden Rohrabschnitte in Richtung des erwärmten Rohrabschnitts (A, B) axial zusammengeführt werden.

2. Verfahren nach Anspruch 1, dadurch gekennzeichnet, daß der für die Ausführung der 180°-Biegung benötigte Abschnitt (B) des geraden Glasrohres (26) in seinen beiden Randbereichen (B1, B2) stärker erwärmt wird als in dem dazwischenliegenden Bereich (B3).

3. Verfahren nach Anspruch 1, dadurch gekennzeichnet, daß das Glasrohr (26, 29) während des Erwärmungs- und Stauchvorganges um seine Längsachse rotiert wird.

4. Verfahren nach Anspruch 1, dadurch gekennzeichnet, daß das Glasrohr (1, 3) während des Erwärmungs- und Stauchvorganges keine Rotation um seine Längsachse erfährt.

5. Verfahren nach Anspruch 1, dadurch gekennzeichnet, daß während des Stauchvorganges mit Hilfe von Blasluft im Glasrohr (3) ein geringer Überdruck erzeugt wird.

## Claims

1. A process for the production of a singly or multiply bent, tubular discharge vessel comprising a straight glass tube for a compact low pressure discharge lamp with a plurality of straight tube sections and 180°-bends (17), wherein, in order to form a 180°-bend (17) at a specific location of the glass tube (1, 26)

   – that section of the tube (A, B) required for the formation of the 180°-bend is heated to softening point
   – the straight tube sections (12, 13; 41, 42) which laterally adjoin the heated section (A, B) are then bent towards one another until they are aligned in parallel
   – and after the bending process the respective 180°-bend (17) of the glass tube (16) is inserted into an appropriate mould (18) and the 180°-bend is provided with rectangular corners (24, 25) by blowing compressed air into the ends of the tube,

   characterised in that prior to the respective bending process the glass tube is caused to bulge in the heated section (A, B) in that the tube sections which laterally adjoin the heated section (A, B) are brought together axially in the direction of the heated tube section (A, B).

2. A process as claimed in claim 1, characterised in that that section (B) of the straight glass tube (26) which is required to form the 180°-bend is heated to a greater extent in its two edge zones (B1, B2) than in the interlying zone (B3).

3. A process as claimed in claim 1, characterised in that the glass tube (26, 29) is rotated about its longitudinal axis during the heating and bulging process.

4. A process as claimed in claim 1, characterised in the glass tube (1, 3) does not rotate about its longitudinal axis during the heating and bulging process.

5. A process as claimed in claim 1, characterised in that a slight excess pressure is produced during the bulging process by means of air blown into the glass tube (3).

## Revendications

1. Procédé pour fabriquer une enceinte tubulaire à décharge comportant un ou plusieurs coudes, à partir d'un tube de verre rectiligne pour une lampe compacte à décharge basse pression, comportant plusieurs sections rectilignes de tube et des coudes à 180° (17), et selon lequel, pour fabriquer un coude à 180° (17) en un emplacement déterminé du tube de verre (1, 26),

   – on chauffe, jusqu'au ramollissement, la section de tube (A, B) nécessaire pour la formation du coude à 180°,
   – on replie ensuite l'un contre l'autre les sections de tube rectilignes (12, 13; 41, 42), qui s'étendent latéralement à partir de la section chauffée (A, B), jusqu'à ce que les sections de tube soient parallèles entre elles, et
   – après l'opération de pliage, on introduit le coude respectif à 180° (17) du tube de verre (16) dans un moule correspondant (18) et on forme, par soufflage d'air comprimé dans les extrémités du tube, des coins rectangulaires (24, 25) au niveau du coude à 180°,

   caractérisé en ce qu'avant l'opération de pliage, on comprime le tube de verre dans la section chauffée (A, B), en rapprochant axialement les sections du tube qui s'étendent latéralement à partir de la section chauffée (A, B), en direction de cette section.

2. Procédé suivant la revendication 1, caractérisé par le fait qu'on chauffe la section (B), nécessaire pou la formation du coude à 180°, du tube de verre rectiligne (26) plus fortement dans ses deux zones marginales (B1, B2) que dans la zone intermédiaire (B3).

3. Procédé suivant la revendication 1, caractérisé par le fait qu'on fait tourner le tube de verre (26, 29) autour de son axe longitudinal pendant l'opération de chauffage et de compression.

4. Procédé suivant la revendication 1, caractérisé par le fait qu'on ne fait subir au tube de verre (1, 3) aucune rotation autour de son axe longitudinal pendant l'opération de chauffage et de compression.

5. Procédé suivant la revendication 1, caractérisé par le fait qu'on produit une légère surpression dans le tube de verre (3) à l'aide d'un air de soufflage, pendant l'opération de compression.

A

2       1       **FIG. 1a**

7       8

A

L       L

5    3      4    **FIG. 1b**    6

EP 0 246 548 B1

FIG. 1c

EP 0 246 548 B1

FIG. 1d

FIG. 1e

B

B3

B1 B2

27 26 FIG. 2a 28

32 33

B

29 30 31 FIG. 2b 34

EP 0 246 548 B1

FIG. 2c

35    36    37

40    38

43    44

41    39    42    FIG. 2d

EP 0 246 548 B1